# EUROPEAN PATENT APPLICATION

(11) **EP 4 498 585 A1**
(43) Date of publication of application: **29.01.2025**
(21) Application number: 23188024.6
(22) Date of filing: 27.07.2023
(51) Int. Cl.: H02M 1/00, H02M 1/32, H02M 1/42, H02M 5/12, H02M 7/145, H02M 7/521, H02M 7/77, H02H 3/00, H02H 5/00, H02M 1/36

(54) **ENERGY CONVERSION ARRANGEMENT AND ELECTROLYSIS SYSTEM**

(71) Applicant: Siemens Energy Global GmbH & Co. KG, 81739 München (DE)
(72) Inventor: Loku, Fisnik, 90768 Fürth (DE); Dros, Arne, 91052 Erlangen (DE); Lukianov, Semen, 90461 Nürnberg (DE); Buratckii, Artem, 90459 Nürnberg (DE)

(57) **Abstract**

An energy conversion arrangement 100 for an electrolysis system 150 comprises an adjustable transformer 101 having a primary-side 102 connectable to an AC power-grid 103 via a point-of-common-coupling, a secondary-side 104, and a tap-changer 105, rectifier transformers 106,107 having primary-sides 108,109 configured to provide secondary-side voltages differing by pre-defined phase-shifts, thyristor rectifier units 114,115,116,117 forming a multipulse rectifier system 118 receiving the secondary-side voltages and providing DC current to electrolyser units 119,120,121,122, and a protection controller unit 133 for connecting/disconnecting the arrangement to/from the grid depending on comparisons of secondary-side voltages with corresponding secondary-side threshold voltages, wherein the multipulse rectifier system comprises synchronization control circuits 123,124,125,126 providing thyristor gate-pulses at firing angles synchronized with the secondary-side voltages, and wherein the corresponding secondary-side threshold voltages are determined by a nominal threshold-voltage in accordance with a grid code at the point-of-common-coupling and physical transformer parameters, adjusted depending on tap-changer position information 129.

## Description

The present disclosure in general relates to conversion of electrical energy, in particular to alternating current (AC) to direct current (DC) conversion. More particularly, the present disclosure relates to an energy conversion arrangement for an electrolysis system and to an electrolysis system. Further, the present disclosure relates to a method for supplying DC current to a set of electrolyser units and to a computer program product.

Electrolysis is a process of using electricity to split water into hydrogen and oxygen. This reaction takes place in a unit called an electrolyser, e.g., a polymer electrolyte membrane (PEM) electrolyser unit, and requires the supply of direct current (DC). An electrolysis system may comprise a set, i.e., one or more, potentially many more, electrolyser units. Such sets of electrolyser units constitute a high-power load and may have a high current demand of DC current, e.g., 7-10 kA.

AC to DC converter systems used for providing such DC currents make use of power electronics components for rectifying transformed alternating current received from an AC power source, in particular an AC power grid, i.e., a (public) electric network. Suitable reliable rectifier circuits are, for example, thyristor-based rectifiers.

A thyristor is a solid-state semiconductor device suitable for high-power applications that acts as a bistable switch which conducts when its gate electrode receives a current trigger signal, i.e., a firing angle signal, as the thyristor gate signal, and continues to conduct until the voltage across the device is reverse-biased or removed. The firing angle of the thyristor is the angle at which it is triggered by the firing angle signal. A thyristor-based rectifier, i.e., a thyristor rectifier, is or comprises, for example, a bridge rectifier built with thyristors.

Here, an energy conversion arrangement refers to an AC to DC converter system coupled to receive alternating currents from a transformer system that is connected to an AC power grid.

Thyristor-based rectifiers allow control of the active power flow to the set of electrolyser units, which may be considered as a non-linear high-power load, by changing the thyristor firing angles, i.e., by using defined firing angle signals (thyristor gate pulses) for the gate activation of the thyristors of the rectifier circuits.

However, thyristor-based rectifier systems with activation by certain firing angle signals generate harmonics on the AC currents of the energy conversion arrangement, for example on the AC current measured at the point-of-common-coupling, i.e., at the point of connection (POC) to the AC power grid. Particularly, lower harmonics (5^{th} - 25^{th} harmonic) could have a negative impact on the AC power grid.

A harmonic of an AC current signal is a current signal with a frequency that is a positive integer multiple of the frequency of the original periodic AC current signal.

In order to minimize the impact of generated harmonics, multiple rectifiers are connected such as to reduce or cancel out the generated harmonics, thereby forming a multipulse rectifier system. For example, the rectifiers may be connected to form a 24-pulse system: Here, the rectifiers are connected in parallel and each of the rectifiers is connected to a row of electrolyser units. Two neighbouring rectifiers connected in parallel cancel their emitted lower harmonics out, thereby building a 12-pulse system. Two 12-pulse systems cancel their emitting harmonics and thereby build a 24-pulse system.

For supplying the thyristor rectifier units of the multipulse rectifier system with multiple phase-shifted alternating voltage input signals, rectifier transformers, i.e., multiphase transformer systems configured to provide multiple alternating secondary side voltages with defined phase-shifts between themselves, i.e., between the secondary side voltages, are required. These multiple phase-shifted alternating secondary side voltages of the rectifier transformers serve as input voltages for the thyristor rectifier units. However, when the thyristor rectifier units receive the firing angle signals, there is a need for synchronising them, e.g., by means of control units such as phase-locked-loop (PLL) control logic, with the input voltages of the thyristor rectifier units, i.e., a rectifier must synchronise the firing angle with the input voltage at the rectifier, i.e., the zerocrossing of the voltage input, to guarantee that the triggering firing angle signal is set in the correct moment. For instance, if a firing angle is at 90°, the rectifier unit must set the firing angle signal at the instance when its input voltage phase is 90°.

On the other hand, the AC power grid requires any connected facility, such as electricity generating plants, consumers, or other connected networks to abide to its grid code, i.e., a technical specification which defines the parameters the connected facility, and therefore also the energy conversion arrangement of the electrolysis system, has to meet to ensure safe, secure, economic and correct functioning of the electric system. An important parameter is the power factor quality. For example, a power factor, i.e., the ratio of the real power absorbed by the connected facility to the apparent power, may be required to stay above a certain threshold, e.g., above 900.

This may result in a voltage threshold value as specified by the grid code at the POC, e.g., 85 % of the nominal primary side voltage, i.e., of the nominal voltage at a primary side of the transformer system of the energy conversion arrangement.

In order to change or improve the power factor, the transformer system of the energy conversion arrangement comprises an adjustable transformer unit equipped with a tap changer for adjusting the adjustable transformer, preferably the secondary side winding. For this, the transformer may comprise a number of taps, i.e., access points, along a winding of the transformer, selectable for connection. This allows active adjustment of the voltage provided to the rectifier transformer units and thereby to the thyristor rectifier units depending on the operating point, and therefore allows to improve the power quality at the point-of-common-coupling, i.e., the point of connection (POC).

However, this has the effect that the input voltages of the thyristor rectifier units, which are the secondary side voltages of the transformer system and are used for the synchronizing voltage input in the phase-locked-loop control of the rectifier units, are subject to changes applied to the adjustable transformer unit, i.e., depend on the respective tap-position of the tap changer of the adjustable transformer.

These variable secondary side voltages could be used by a controller at the same time for determining protection scheme limits to comply with the grid code, such as which voltage levels are acceptable to keep the power factor at the POC above the threshold requested by the grid code. Furthermore, not only the voltage level change itself due to a newly adjusted tap-position needs to be taken into consideration, but also that any voltage level drop during the commutation process, which may take, e.g., some milliseconds, when a taprepositioning from one tap-position to another, which may take several seconds, e.g., 3 seconds, might require that any protection logic is either deactivated or the threshold voltage is set to a lower value than a required threshold value by a grid code. However, during that period any undervoltage leads to a violation of the grid requirements, which may be critical for the electrolyser units connected to the energy conversion arrangement. Or if only worst-case-scenarios for the undervoltage or overvoltage protection are taken into account, e.g., considering the primary-side threshold for the no-load secondary-side voltage at the highest tap-position for the operation mode of the electrolyser in addition to the resulting voltage drop from the lower tap-positions, the requirements as set by the grid code of the connected AC power grid are not always fully met.

It is an objective of the present invention to provide a possibility for DC current supply to a high-power load such as a set of electrolyser units from an AC power grid by means of an energy conversion arrangement with reduced impact by AC current harmonics that allows continuous protection in compliance with the grid code of the AC power grid.

This objective is solved by an energy conversion arrangement for an electrolysis system as stated in claim 1 and an electrolysis system as stated in claim 9. A corresponding method for supplying DC current to a set of electrolyser units and a computer program product are disclosed in claims 10 and 13, respectively. Advantageous additional embodiments of the invention are disclosed in the respective dependent claims.

According to a first aspect of the invention, an energy conversion arrangement for an electrolysis system is provided, which comprises an adjustable transformer (as a first part of a transformer system) having an adjustable transformer primary side (which refers to the primary side winding of the adjustable transformer) connectable to an AC power grid via a point-of-common-coupling i.e., a point of connection (POC), an adjustable transformer secondary side (which refers to the secondary side winding of the adjustable transformer), and a tap changer (105) for adjusting the adjustable transformer. The energy conversion arrangement further comprises (as a second part of the transformer system) a set of rectifier transformers having primary sides connected to the adjustable transformer secondary side and configured to provide on their secondary sides a plurality of alternating secondary side voltages differing between themselves at least by pre-defined phase-shifts.

Further, the energy conversion arrangement comprises a plurality of thyristor rectifier units configured to form a multipulse rectifier system. This multipulse rectifier system is connected to receive the plurality of alternating secondary side voltages from the rectifier transformers and is connected or connectable to provide DC current to a set of electrolyser units. The multipulse rectifier system comprises (or is connected to) one or more synchronization control circuits, i.e., control units, configured to provide thyristor gate pulses to the thyristor rectifier units at firing angles synchronized with said alternating secondary side voltages. In an embodiment, the synchronization control circuits are implemented as phase-locked-loop circuits, i.e., as phase-locked-loop control logic, as control units. The synchronization control circuits may be provided as separate circuits or as a single circuit configured to provide all the required thyristor gate pulses, i.e., firing angle signals, for the different thyristor rectifier units.

And the energy conversion arrangement comprises a protection controller unit configured to connect and disconnect the energy conversion arrangement to and from the AC power grid depending on comparisons of the alternating secondary side voltages with corresponding adjustable secondary side threshold voltages. These corresponding adjustable secondary side threshold voltages are determined by a nominal threshold voltage in accordance with a grid code of the AC power grid at the point-of-common-coupling, i.e., a point of connection (POC), and fixed, i.e., constant, physical parameters of the set of rectifier transformers and the adjustable transformer, adjusted depending on a position information of the tap changer.

The protection controller unit may, for example, be implemented as logic comparison circuitry together with a switch for connecting and disconnecting the energy conversion arrangement from the AC power grid. In another embodiment, the protection controller unit is a controller, particularly a programmable controller, i.e., a programmable device comprising at least a processor and a memory unit, or is a part of such a controller, connected to receive at least voltage signals corresponding to the alternating secondary side voltages and having stored therein protection scheme rules based on the grid code applicable to the connected power grid.

Considering that the physical parameters of the transformer system are constant and therefore for each tap-position the secondary-side voltages are known, the single constant primary-side voltage threshold at the POC as specified by the grid code of the AC power grid determines the adjustable secondary side threshold voltages, i.e., the secondary side threshold voltages for each of the possible tap-positions. Therefore, the protection controller unit can be configured to derive the same results from comparison of the alternating secondary side voltages and the corresponding secondary side threshold voltages, merely adjusted depending on the position information of the tap changer of the adjustable transformer, as from comparison of a primary side voltage at the POC and the primary-side threshold voltage as specified by the grid code of the AC power grid.

Further, the comparison with the alternating secondary side voltages can be carried out merely based on a position information from the tap-changer and stored per-unitized secondary side threshold voltages, pre-determined based on the primary side threshold voltage as specified by the grid code. In an embodiment, the comparison can be carried out by the protection controller unit merely by means of a set of additional comparator circuits. Further, the synchronization control of the thyristor rectifier units can use the alternating secondary side voltages for synchronization of the firing angle signals of the thyristor rectifier units.

In an embodiment, the energy conversion arrangement further comprises a plurality of sensor devices connected to sense said plurality of alternating secondary side voltages and provide corresponding secondary side voltage signals to the protection controller unit. This allows to supply signals corresponding to the secondary side voltages to a protection controller unit that is not set up as a power electronics device. The secondary side voltage signals may also be used for synchronizing the input voltages of the thyristor rectifier units with the applied firing angle signals.

In an embodiment of the energy conversion arrangement, the protection controller unit comprises a memory unit having stored the adjustable secondary side threshold voltages for discrete tap changer positions. This allows to carry out the comparisons with the secondary side voltages without configuring the protection controller unit to determine the adjustable secondary side threshold voltages itself.

Further, in one embodiment of the energy conversion arrangement the adjustable transformer is an autotransformer, i.e., an electrical transformer with only one winding, in which a portion of the same winding works as both the primary winding side and the secondary winding side of the transformer. Here, the autotransformer is an adjustable transformer where said portion can be changed. Autotransformers have only low losses and can be built smaller and cheaper than common dual-winding transformers.

In one embodiment, the energy conversion arrangement comprises at least one 6-pulse thyristor bridge rectifier. A 6-pulse thyristor bridge rectifier system may comprise two 3-pulse thyristor bridge rectifier systems connected in parallel.

In one embodiment of the energy conversion arrangement, the multipulse rectifier system comprises at least two 6-pulse thyristor bridge rectifiers connected in parallel to form a 12-pulse thyristor bridge rectifier system and cancel their emitted lower harmonics.

In a preferred embodiment of the energy conversion arrangement, the multipulse rectifier system comprises at least two 12-pulse thyristor bridge rectifier systems connected in parallel to form a 24-pulse thyristor bridge rectifier system and cancel their emitted lower harmonics.

And in one embodiment, the energy conversion arrangement is further configured to change firing angles of the thyristor rectifier units depending on DC current values requested by corresponding connected electrolyser units. Such a DC current control loop may, for example, comprise a controller arranged to control the DC current flow by adjusting the firing angles of the thyristor rectifiers such that the DC current is provided at the required level, i.e., the wanted operation point of the electrolyser units. For example, the controller may be connected to receive DC current level request signals from connected electrolyser units, configured to determine required firing angles, and connected to supply corresponding firing angle signals to the thyristor rectifier units of the multipulse rectifier system. In one embodiment, this controller is separate from the protection controller unit. In another embodiment, both controllers are provided as a single device. For example, the protection controller unit may be a part of the controller.

According to a second aspect of the invention, an electrolysis system comprises a set of electrolyser units and an energy conversion system according to the first aspect of the invention and therefore implements the advantages and characteristics of the claimed energy conversion system.

And according to a third aspect of the invention, a method for supplying DC current to a set of electrolyser units using an energy conversion arrangement according to the first aspect of the invention is provided. It comprises connecting an adjustable transformer primary side winding of an adjustable transformer of the energy conversion arrangement via a point-of-common-coupling to an AC power grid and connecting a multipulse rectifier system of the energy conversion arrangement to supply DC current to a set of electrolyser units.

The method also comprises applying an adjustable transformer secondary side voltage of the adjustable transformer to primary sides of a set of rectifier transformers configured to provide on their secondary sides a plurality of alternating secondary side voltages differing between themselves at least by pre-defined phase-shifts and applying the plurality of alternating secondary side voltages and thyristor gate pulses at firing angles synchronized with said alternating synchronization voltage signals to a plurality of thyristor rectifier units forming the multipulse rectifier system to generate said DC current for supply to the set of electrolyser units.

The method further comprises determining a position information of a tap changer of the adjustable transformer and determining corresponding adjustable secondary side threshold voltages for the alternating secondary side voltages in accordance with a grid code of the AC power grid at the point-of-current-coupling, i.e., at the point of connection (POC), and fixed physical parameters of the set of rectifier transformers and the adjustable transformer, adjusted depending on said position information of the tap changer.

Further, the method comprises comparing the alternating secondary side voltages and the determined corresponding adjustable secondary side threshold voltages, and connecting and disconnecting the energy conversion arrangement to and from the AC power grid depending on a result of the comparisons.

In one embodiment of the method, it further comprises changing a tap position of the tap changer of the adjustable transformer and adjusting the adjustable secondary side threshold voltages depending on a position information of the tap changer. This allows to influence the power factor of the energy conversion arrangement and to update the adjustable secondary side threshold voltages accordingly.

And in one embodiment, the method comprises changing firing angles depending on DC current values requested by corresponding connected electrolyser units, such that the DC current is provided at the required level, i.e., the wanted operation point of the electrolyser modules.

Further, according to a fourth aspect of the invention, a computer program product comprises code portions that, when executed on a programmable apparatus, enable the energy conversion arrangement to carry out steps of a method according to the third aspect of the invention. In other words, the computer program product comprises code portions that, when executed on the programmable apparatus, enable the energy conversion arrangement to carry out a method according to an embodiment of the invention.

The programmable apparatus may be a programmable apparatus of the energy conversion arrangement, in particular the protection controller unit, or a controller comprising the protection controller unit, of the energy conversion arrangement, adapted to send to, process and receive signals from different units of the energy conversion arrangement, e. g. the position information of the tap changer and alternating secondary side voltages signals. In a preferred embodiment, it is further configured to receive DC current level request signals from connected electrolyser units, configured to determine required firing angles, and connected to supply corresponding firing angle signals to the thyristor rectifier units of the multipulse rectifier system. In another embodiment, the programmable apparatus may be connected or connectable to the energy conversion arrangement.

The computer program product corresponds to a computer program, at least including software code portions for performing steps of the method according to the invention when run on a programmable apparatus, such as the controller or other computer, for enabling the energy conversion arrangement to perform functions according to the invention. The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features and advantages of the invention described above, and the manner in which they are achieved, will become clearer and more clearly understood in connection with the following description of the exemplary embodiments, which are explained in more detail in connection with the drawings, wherein
- Fig. 1: schematically illustrates an example of an electrolysis system comprising an energy conversion arrangement according to an embodiment of the invention; and
- Fig. 2: schematically illustrates an example of a method for supplying DC current to a set of electrolyser units using an energy conversion arrangement according to another embodiment of the invention.

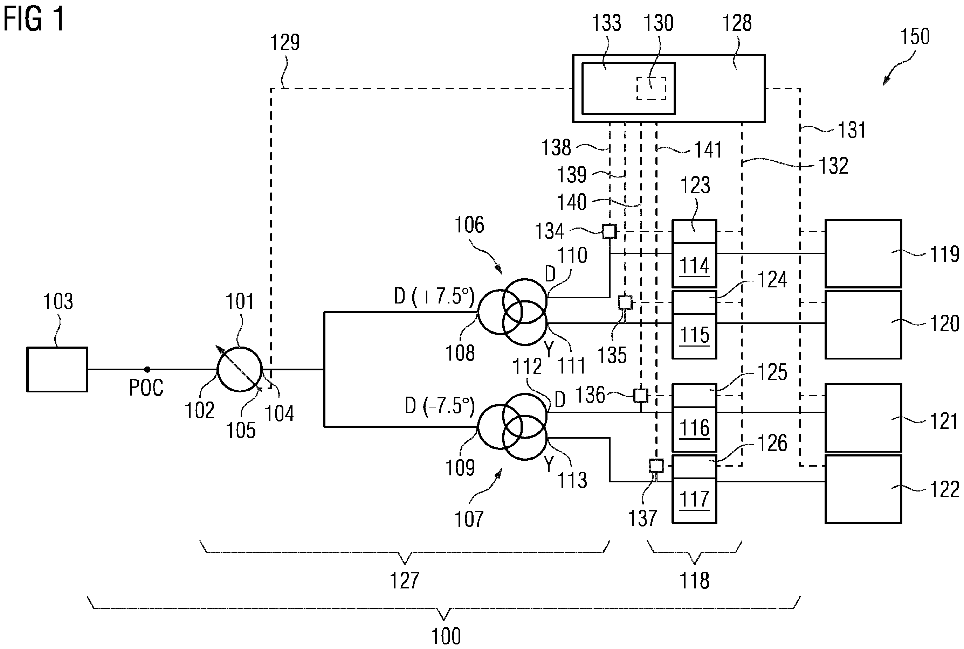

In Fig. 1, an example of an electrolysis system 150 comprising an energy conversion arrangement 100 according to an embodiment of the invention is schematically illustrated. The energy conversion arrangement 100 comprises an adjustable transformer 101 (as a first part of a transformer system 127) having an adjustable transformer primary side 102 (which refers to the primary side winding of the adjustable transformer 101) that is connected to an AC power grid 103 as an AC source via a point-of-common-coupling, i.e., a point of connection (POC), an adjustable transformer secondary side 104 (which refers to the secondary side winding of the adjustable transformer 101), and a tap changer 105 for adjusting the adjustable transformer 101. In the embodiment shown in Fig. 1, the adjustable transformer 101 is an autotransformer.

A second part of the transformer system 127 consists of a set of rectifier transformers 106, 107 having their primary sides 108, 109 connected to the adjustable transformer secondary side 104. The rectifier transformers 106, 107 provide on their secondary sides 110, 111, 112, 113 a plurality of alternating secondary side voltages which differ between themselves by pre-defined phase-shifts.

The energy conversion arrangement 100 further comprises thyristor rectifier units 114, 115, 116, 117. A thyristor rectifier unit consists of or comprises a thyristor rectifier, i.e., a rectifier circuit built from thyristors, wherein the term "unit" merely takes into account that other circuitry, such as resistors, may be part of the circuit. A rectifier circuit may, for example, be a bridge rectifier circuit. The thyristor rectifier units 114, 115, 116, 117 are connected to form a multipulse rectifier system 118. This multipulse rectifier system 118 receives the alternating secondary side voltages from the rectifier transformers 106, 107 and is connected to provide DC current to a set of electrolyser units 119, 120, 121, 122.

As an example, in the embodiment shown in Fig. 1, for suppression of harmonics, the thyristor rectifier units 114, 115, 116, 117 may be implemented as 6-pulse thyristor bridge rectifiers. A 6-pulse thyristor bridge rectifier system may comprise two 3-pulse thyristor bridge rectifier systems connected in parallel, wherein two thyristor rectifier units 114, 115 are connected in parallel to form a first 12-pulse thyristor bridge rectifier system and cancel their corresponding emitted lower harmonics, and the other two thyristor rectifier units 116, 117 are connected in parallel to form a second 12-pulse thyristor bridge rectifier system and cancel their corresponding emitted lower harmonics, and wherein the two 12-pulse thyristor bridge rectifier systems are connected in parallel to form a 24-pulse thyristor bridge rectifier system for cancelling their emitting harmonics.

The multipulse rectifier system 118 comprises synchronization control circuits 123, 124, 125, 126 configured to provide thyristor gate pulses to the thyristor rectifier units 114, 115, 116, 117 at firing angles synchronized with the alternating secondary side voltages. The synchronization control circuits, i.e. control units, are implemented as phase-locked-loop control logic. In the embodiment shown in Fig. 1, the synchronization control circuits 123, 124, 125, 126 are provided as separate circuits, one for each thyristor rectifier unit 114, 115, 116, 117, and configured to provide thyristor gate pulses, i.e., firing angle signals, for the corresponding thyristor rectifier units 114, 115, 116, 117.

The energy conversion arrangement 100 further comprises a protection controller unit 133 that is configured to connect and disconnect the energy conversion arrangement 100 to and from the AC power grid 103 depending on comparisons of the alternating secondary side voltages with corresponding adjustable secondary side threshold voltages. The corresponding adjustable secondary side threshold voltages are determined by a nominal threshold voltage in accordance with a grid code of the AC power grid 103 at the point-of-common-coupling, i.e., the point of connection (POC), and fixed, i.e., constant, physical parameters of the set of rectifier transformers 106, 107 and the adjustable transformer 101, adjusted depending on a position information of the tap changer 105. The constant physical parameters, e.g., define a transfer function of the used transformer system 127.

In the embodiment shown in Fig. 1, the comparisons between the alternating secondary side voltages and the corresponding adjustable secondary side threshold voltages are carried out by the protection controller unit 133 by first receiving a position information signal 129 from the tap changer 105 of the adjustable transformer 101 and selecting previously determined and stored adjustable secondary side threshold voltage values for that tap position, which were previously determined from the nominal threshold voltage at the POC in accordance with the grid code. Then, comparisons are carried out by the protection controller unit 133 between these threshold values and corresponding values of alternating secondary side voltage signals 138, 139, 140, 141 representing the alternating secondary side voltages sensed by sensor devices 134, 135, 136, 137, wherein the threshold values, i.e. the values of the adjustable secondary side threshold voltages are provided by a memory unit 130 at least having stored therein values of the adjustable secondary side threshold voltages for discrete tap changer positions.

In the embodiment shown in Fig. 1, the secondary side voltage signals are also applied to the synchronization control circuits 123, 124, 125, 126 for synchronizing the input voltages of the thyristor rectifier units 114, 115, 116, 117 with the applied firing angle signals 132. In the embodiment shown in Fig. 1, the protection controller unit 133 is part of a controller 128, which can be a programmable controller. The controller 128 is part of a current control loop and is configured to change firing angles of the thyristor rectifier units 114, 115, 116, 117 depending on DC current values requested by corresponding connected electrolyser units 119, 120, 121, 122. Here, the controller unit 128 is connected to receive DC current level request signals 131 from connected electrolyser units 119, 120, 121, 122, configured to determine required firing angles such that the DC current is provided at the required level, and connected to supply corresponding firing angle signals 132 to the synchronization control circuits 123, 124, 125, 126 of the thyristor rectifier units 114, 115, 116, 117 of the multipulse rectifier system 118. After synchronization, the firing angle signals 132 serve as thyristor gate pulses to the corresponding thyristor rectifier units 114, 115, 116, 117.

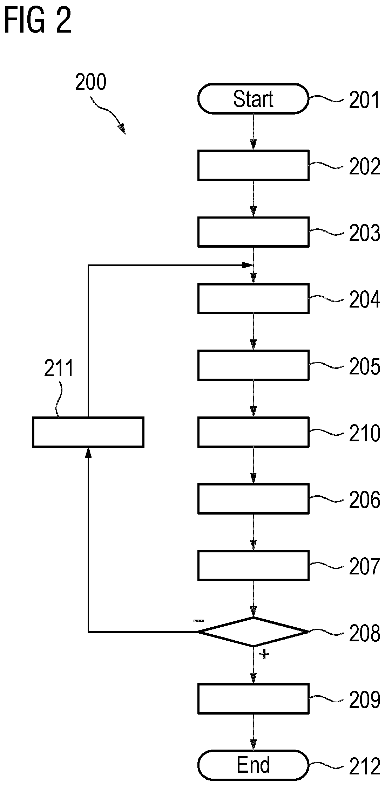

In Fig. 2 an example of a method 200 for supplying DC current to a set of electrolyser units using an energy conversion arrangement according to another embodiment of the invention is schematically illustrated. The method 200 for supplying DC current to a set of electrolyser units using an energy conversion arrangement as shown in Fig. 1 is provided. After start 201, an adjustable transformer primary side of an adjustable transformer of the energy conversion arrangement is connected 202 via a point-of-common-coupling to an AC power grid, and a multipulse rectifier system of the energy conversion arrangement is connected 203 to supply DC current to a set of electrolyser units. In a next step, an adjustable transformer secondary side voltage of the adjustable transformer is applied 204 to primary sides of a set of rectifier transformers configured to provide on their secondary sides a plurality of alternating secondary side voltages differing between themselves at least by pre-defined phase-shifts. In a next step, said plurality of alternating secondary side voltages and thyristor gate pulses at firing angles synchronized with said alternating secondary side voltages are applied 205 to a plurality of thyristor rectifier units forming the multipulse rectifier system to generate the DC current for supply to the set of electrolyser units.

In the shown embodiment, the method further comprises a step of changing 210 a tap position of the tap changer of the adjustable transformer to influence the power factor of the energy conversion arrangement.

In a next step, a position information of the tap changer of the adjustable transformer is determined 206, and corresponding adjustable secondary side threshold voltages for the alternating secondary side voltages are determined 207 in accordance with a grid code of the AC power grid at the point of current coupling and fixed physical parameters of the set of rectifier transformers and the adjustable transformer, adjusted depending on said position information of the tap changer.

In a next step, the alternating secondary side voltages are compared 208 with the determined corresponding adjustable secondary side threshold voltages. In case the comparison results reveal that one or more of the alternating secondary side voltages differ from their corresponding adjustable secondary side threshold voltages by more than an allowed limit (in Fig. 2 indicated as "+"), the energy conversion arrangement is disconnected 209 from the AC power grid and the method ends 212.

Otherwise, i.e. in case the comparison results reveal that the alternating secondary side voltages do not differ from their corresponding adjustable secondary side threshold voltages by more than the allowed limit (in Fig. 2 indicated as "-"), the energy conversion arrangement is kept connected to the AC power grid and the method moves to the next step of changing 211 firing angles depending on DC current values requested by corresponding connected electrolyser units before returning to the steep of applying 204 the adjustable transformer secondary side voltage of the adjustable transformer to primary sides of the set of rectifier transformers.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to certain sequence or order of steps, may at least partly be carried out in a different order or simultaneously. Other steps may be added and certain steps described here may be left out.

Although the invention has been illustrated and described in detail by the shown preferred embodiments, the invention is not limited by the disclosed examples and other variations can be derived therefrom by those skilled in the art without departing from the scope of the invention.

In summary, an energy conversion arrangement 100 for an electrolysis system 150 comprises an adjustable transformer 101 having a primary-side 102 connectable to an AC power-grid 103 via a point-of-common-coupling, a secondary-side 104, and a tap-changer 105, rectifier transformers 106,107 having primary-sides 108,109 configured to provide secondary-side voltages differing by pre-defined phase-shifts, thyristor rectifier units 114,115,116,117 forming a multipulse rectifier system 118 receiving the secondary-side voltages and providing DC current to electrolyser units 119,120,121,122, and a protection controller unit 133 for connecting/disconnecting the arrangement to/from the grid depending on comparisons of secondary-side voltages with corresponding secondary-side threshold voltages, wherein the multipulse rectifier system comprises synchronization control circuits 123,124,125,126 providing thyristor gate-pulses at firing angles synchronized with the secondary-side voltages, and wherein the corresponding secondary-side threshold voltages are determined by a nominal threshold-voltage in accordance with a grid code at the point-of-common-coupling and physical transformer parameters, adjusted depending on tap-changer position information 129.

Further, an electrolysis system 150, a method 200 for supplying DC current to a set of electrolyser units, and a computer program product are provided.

### List of reference signs

- 100: energy conversion arrangement
- 101: adjustable transformer
- 102: adjustable transformer primary side
- 103: AC power grid
- 104: adjustable transformer secondary side
- 105: tap changer
- 106: rectifier transformer
- 107: rectifier transformer
- 108: primary side
- 109: primary side
- 110: secondary side
- 111: secondary side
- 112: secondary side
- 113: secondary side
- 114: thyristor rectifier unit
- 115: thyristor rectifier unit
- 116: thyristor rectifier unit
- 117: thyristor rectifier unit
- 118: multipulse rectifier system
- 119: electrolyser unit
- 120: electrolyser unit
- 121: electrolyser unit
- 122: electrolyser unit
- 123: synchronization control circuit
- 124: synchronization control circuit
- 125: synchronization control circuit
- 126: synchronization control circuit
- 127: transformer system
- 128: controller unit
- 129: position information signal
- 130: memory unit
- 131: DC current level request signals
- 132: firing angle signals
- 133: protection controller unit
- 134: sensor device
- 135: sensor device
- 136: sensor device
- 137: sensor device
- 138: secondary side voltage signal
- 139: secondary side voltage signal
- 140: secondary side voltage signal
- 141: secondary side voltage signal
- 150: electrolysis system
- 200: method for supplying DC current to a set of electrolyser units
- 201: start
- 202: connecting an adjustable transformer primary side
- 203: connecting a multipulse rectifier system
- 204: applying adjustable transformer secondary side voltage
- 205: applying the plurality of alternating secondary side voltages
- 206: determining a position information of a tap changer
- 207: determining corresponding adjustable secondary side threshold voltages
- 208: comparing the alternating secondary side voltages
- 209: disconnecting the energy conversion arrangement from the AC power grid
- 210: changing a tap position of the tap changer of the adjustable transformer
- 211: changing firing angles depending on DC current values
- 212: end

## Claims

1. Energy conversion arrangement (100) for an electrolysis system (150), comprising
an adjustable transformer (101) having an adjustable transformer primary side (102) connectable to an AC power grid (103) via a point-of-common-coupling, an adjustable transformer secondary side (104), and a tap changer (105) for adjusting said adjustable transformer (101);
a set of rectifier transformers (106, 107) having primary sides (108, 109) connected to said adjustable transformer secondary side (104) and configured to provide on their secondary sides (110, 111, 112, 113) a plurality of alternating secondary side voltages differing between themselves at least by pre-defined phase-shifts;
a plurality of thyristor rectifier units (114, 115, 116, 117) configured to form a multipulse rectifier system (118), said multipulse rectifier system (118) connected to receive said plurality of alternating secondary side voltages and connectable to provide DC current to a set of electrolyser units (119, 120, 121, 122); and
a protection controller unit (133) configured to connect and disconnect the energy conversion arrangement (100) to and from the AC power grid (103) depending on comparisons of said alternating secondary side voltages with corresponding adjustable secondary side threshold voltages, wherein
said multipulse rectifier system (118) comprises one or more synchronization control circuits (123, 124, 125, 126) configured to provide thyristor gate pulses to the thyristor rectifier units (114, 115, 116, 117) at firing angles synchronized with said alternating secondary side voltages, and wherein
said corresponding adjustable secondary side threshold voltages are determined by a nominal threshold voltage in accordance with a grid code of the AC power grid (103) at the point-of-common-coupling and fixed physical parameters of said set of rectifier transformers (106,107) and said adjustable transformer (101), adjusted depending on a position information (129) of the tap changer (105).

2. The energy conversion arrangement as claimed in claim 1, further comprising a plurality of sensor devices (134,135,136,137) connected to sense said plurality of alternating secondary side voltages and provide corresponding secondary side voltage signals (138,139,140,141) to the protection controller unit (133).

3. The energy conversion arrangement as claimed in claim 1 or claim 2, wherein said protection controller unit (133) comprises a memory unit (130) having stored the adjustabe secondary side threshold voltages for discrete tap changer positions.

4. The energy conversion arrangement as claimed in any of the preceding claims, wherein said adjustable transformer (101) is an autotransformer.

5. The energy conversion arrangement as claimed in any of the preceding claims, wherein said multipulse rectifier system (118) comprises at least one 6-pulse thyristor bridge rectifier.

6. The energy conversion arrangement as claimed in any of the preceding claims, wherein said multipulse rectifier system (118) comprises at least two 6-pulse thyristor bridge rectifiers connected in parallel to form a 12-pulse thyristor bridge rectifier system.

7. The energy conversion arrangement as claimed in any of the preceding claims, wherein said multipulse rectifier system (118) comprises at least two 12-pulse thyristor bridge rectifier systems connected in parallel to form a 24-pulse thyristor bridge rectifier system.

8. The energy conversion arrangement as claimed in any of the preceding claims, further configured to change firing angles of said thyristor rectifier units (114, 115, 116, 117) depending on DC current values requested by corresponding connected electrolyser units (119, 120, 121, 122).

9. Electrolysis system (150), comprising a set of electrolyser units (119, 120, 121, 122) and an energy conversion system (100) as claimed in any of claims 1 to 8.

10. Method (200) for supplying DC current to a set of electrolyser units using an energy conversion arrangement as claimed in any of claims 1 to 8, comprising
connecting (202) an adjustable transformer primary side of an adjustable transformer of the energy conversion arrangement via a point-of-common-coupling to an AC power grid; connecting (203) a multipulse rectifier system of the energy conversion arrangement to supply DC current to a set of electrolyser units;
applying (204) an adjustable transformer secondary side voltage of the adjustable transformer to primary sides of a set of rectifier transformers configured to provide on their secondary sides a plurality of alternating secondary side voltages differing between themselves at least by pre-defined phase-shifts;
applying (205) said plurality of alternating secondary side voltages and thyristor gate pulses at firing angles synchronized with said alternating secondary side voltages to a plurality of thyristor rectifier units forming the multipulse rectifier system to generate said DC current for supply to the set of electrolyser units;
determining (206) a position information of a tap changer of the adjustable transformer;
determining (207) corresponding adjustable secondary side threshold voltages for said alternating secondary side voltages in accordance with a grid code of the AC power grid at the point of current coupling and fixed physical parameters of said set of rectifier transformers and said adjustable transformer, adjusted depending on said position information of the tap changer;
comparing (208) said alternating secondary side voltages and the determined corresponding adjustable secondary side threshold voltages; and
connecting and disconnecting (209) the energy conversion arrangement to and from the AC power grid depending on a result of the comparisons.

11. The method as claimed in claim 10, further comprising changing (210) a tap position of the tap changer of the adjustable transformer.

12. The method as claimed in claim 10 or claim 11, further comprising changing (211) firing angles depending on DC current values requested by corresponding connected electrolyser units.

13. A computer program product, comprising code portions that, when executed on a programmable apparatus, enable the energy conversion arrangement to carry out steps of a method according to any of the claims 10 to 12.
